# EUROPÄISCHE PATENTANMELDUNG

(11) **EP 1 785 911 A1**
(43) Veröffentlichungstag der Anmeldung: **16.05.2007**
(21) Anmeldenummer: 05023739.5
(22) Anmeldetag: 31.10.2005
(51) Int. Cl.: G06K 7/00

(54) **Kartenleser mit leiterbahnstrukturierter Kunststoffabdeckung**

(71) Anmelder: ddm hopt + schuler GmbH & Co. KG., 78628 Rottweil (DE)
(72) Erfinder: Hopt, Karl-Rudolf, D-78628 Rottweil (DE); Hopt, Jürgen, D-78628 Rottweil (DE)
(74) Vertreter: Kohler Schmid Möbus

(57) **Zusammenfassung**

Bei einem Kartenleser (1), insbesondere Chipkartenleser, mit einer auf einer Leiterplatte (2) montierten Kontaktiereinheit (3), die elektrische Kontakte (4) zum Kontaktieren einer in die Kontaktiereinheit (3) eingeführten Karte (5) aufweist, ist erfindungsgemäß die Kontaktiereinheit (3) zumindest im Bereich ihrer elektrischen Kontakte (4) von einer insbesondere haubenförmigen Kunststoffabdeckung (8) abgedeckt, die auf der Leiterplatte (2) oder an der Kontaktiereinheit (3) befestigt ist und deren der Kontaktiereinheit (3) zugewandte Kunststoffoberfläche (9) zumindest im Bereich der elektrischen Kontakte (4) der Kontaktiereinheit (3) von einer vollflächigen Leiterbahnstruktur mit einer oder mehreren durchgehenden Leiterbahnen (10) überzogen ist, die jeweils mit der Leiterplatte (2) oder der Kontaktiereinheit (3) elektrisch verbunden sind.

## Beschreibung

Die vorliegende Erfindung betrifft einen Kartenleser, insbesondere Chipkartenleser, mit einer auf einer Leiterplatte montierten Kontaktiereinheit, die elektrische Kontakte zum Kontaktieren einer in die Kontaktiereinheit eingeführten Karte aufweist.

Bei bekannten Kartenlesern dieser Art kann der Datenaustausch mit einer Karte durch Kontaktieren der elektrischen Kontakte der Kontaktiereinheit manipuliert werden.

Die Aufgabe der vorliegenden Erfindung ist es, einen Kartenleser der eingangs genannten Art vor solchen Manipulationen zu schützen, d.h., einen "sicheren Kartenleser" bereitzustellen.

Diese Aufgabe wird erfindungsgemäß dadurch gelöst, dass die Kontaktiereinheit zumindest im Bereich ihrer elektrischen Kontakte von einer insbesondere haubenförmigen Kunststoffabdeckung abgedeckt ist, die auf der Leiterplatte oder an der Kontaktiereinheit befestigt ist und deren der Kontaktiereinheit zugewandte Kunststoffoberfläche zumindest im Bereich der elektrischen Kontakte der Kontaktiereinheit von einer vollflächigen Leiterbahnstruktur mit einer oder mehreren durchgehenden Leiterbahnen überzogen ist, die jeweils mit der Leiterplatte oder der Kontaktiereinheit elektrisch verbunden sind. Die Leiterbahnstruktur ist erfindungsgemäß direkt auf die Kunststoffoberfläche aufgebracht.

Im Betrieb fließt über die durchgehende Leiterbahn ein Strom. Wenn die Kunststoffabdeckung entfernt oder z.B. durch Bohren zerstört wird, wird die durchgehende Leiterbahn durchtrennt. Dies wird von einer Steuereinheit bzw. von der Kontaktiereinheit erkannt, die dann keinen Lesevorgang mehr zulässt bzw. sich selbst außer Funktion setzt. Eine Manipulation des Datenaustauschs mit einer eingeführten Karte ist somit nicht mehr möglich.

Vorzugsweise ist die gesamte Kunststoffabdeckung mit der vollflächigen Leiterbahnstruktur überzogen, wobei benachbarte Leiterbahnabschnitte der Leiterbahnstruktur so eng wie möglich nebeneinander angeordnet sind, bevorzugt mit einem Abstand von höchstens ca. 0,5 mm, besonders bevorzugt von ca. 0,25 mm.

Die auf der Leiterplatte aufliegende Anlagefläche der Kunststoffabdeckung weist vorteilhaft für jede durchgehende Leiterbahn zwei elektrische Kontakte auf, die durch die durchgehende Leiterbahn miteinander elektrisch verbunden sind und die durch Andrücken oder Verlöten elektrische Gegenkontakte der Leiterplatte kontaktieren.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: den erfindungsgemäßen Kartenleser mit noch nicht montierter leiterbahnstrukturierter Kunststoffabdeckung; und
- Fig. 2: den erfindungsgemäßen Kartenleser von Fig. 1 mit montierter leiterbahnstrukturierter Kunststoffabdeckung.

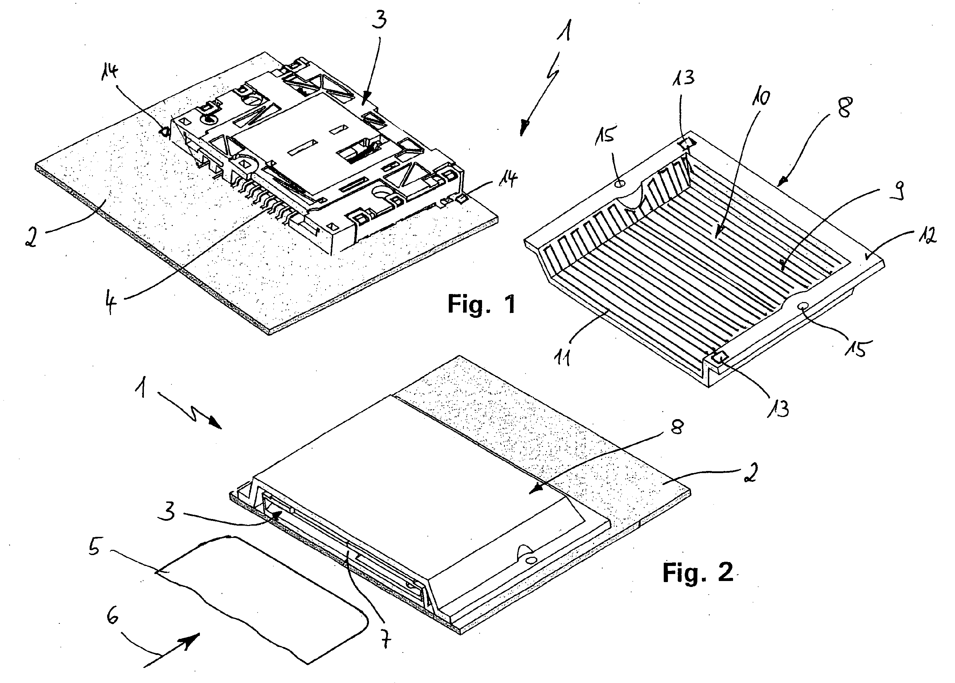

Der in **Fign. 1 und 2** gezeigte Chipkartenleser **1** weist eine auf einer Leiterplatte **2** montierte Kontaktiereinheit **3** mit elektrischen Kontakten (Lötpins) **4** auf, um elektrische Kontaktfelder einer in die Kontaktiereinheit 3 eingeführten Chipkarte **5** zu kontaktieren. Die Chipkarte 5 trägt zum Speichern der Daten einen Mikrochip (nicht gezeigt), dessen Kontakte als elektrische Kontaktfelder (nicht gezeigt) auf der Kartenoberfläche vorgesehen sind. Die Chipkarte 5 wird durch den Benutzer in Einführrichtung **6** über eine Karteneinführöffnung **7** in ihre Datenaustauschposition in die Kontaktiereinheit 3 eingeführt und nach dem Datenaustausch vom Benutzer wieder aus der Kontaktiereinheit 3 herausgezogen (so genannter Push/Pull-Kartenleser).

Um die elektrischen Kontakte 4 der Kontaktiereinheit 3 vor Manipulation zu schützen, ist die Kontaktiereinheit 3 bis auf die Karteneinführöffnung 7 vollständig von einer haubenförmigen Kunststoffabdeckung **8** abgedeckt, die auf der Leiterplatte 2 befestigt wird. Die der Kontakteinheit 3 zugewandte Kunststoffoberfläche **9** der Kunststoffabdeckung 8 ist von einer vollflächigen feinen Leiterbahnstruktur aus einer mäanderförmigen, durchgehenden Leiterbahn **10** überzogen, deren benachbarte Leiterbahnabschnitte **11** voneinander ca. 0,25 mm beabstandet sind. Die Leiterbahn10 ist direkt auf die Kunststoffoberfläche 9 aufgebracht. Die auf der Leiterplatte 2 zur Auflage kommende Anlagefläche **12** der Kunststoffabdeckung 8 weist zwei hier als Kontaktflächen ausgestaltete elektrische Kontakte **13** auf, die durch die durchgehende Leiterbahn 10 miteinander elektrisch verbunden sind und mit elektrischen Gegenkontakten **14** auf der Leiterplatte 2 elektrisch verbunden sind. Die Kunststoffabdeckung 8 wird unter Ausbildung der elektrischen Verbindung zwischen Kontakten 13 und Gegenkontakten 14 auf der Leiterplatte 2 verschraubt, wie durch Schraublöcher **15** angedeutet ist. Diese elektrische Verbindung kann allein durch den Anpressdruck zwischen Kontakt 13 und Gegenkontakt 14 oder durch Verlöten erfolgen, wodurch eine Verbindung zwischen Leiterplatte 2 und Kunststoffabdeckung 8 entsteht. Die Gegenkontakte 14 sind mit einer Steuereinheit (nicht gezeigt) der Kontaktiereinheit 3 elektrisch verbunden.

Im Betrieb fließt über die durchgehende Leiterbahn 10 ein Strom. Wenn die Kunststoffabdeckung 8 entfernt oder z.B. durch Bohren zerstört wird, wird die durchgehende Leiterbahn 10 durchtrennt. Dies wird von der Steuereinheit bzw. von der Kontaktiereinheit 3 erkannt, die dann keinen Lesevorgang mehr zulässt bzw. sich selbst außer Funktion setzt. Eine Manipulation des Datenaustausches mit einer eingeführten Karte 5 ist somit nicht mehr möglich, so dass ein "sicherer Kartenleser" ermöglicht wird.

## Patentansprüche

1. Kartenleser (1), insbesondere Chipkartenleser, mit einer auf einer Leiterplatte (2) montierten Kontaktiereinheit (3), die elektrische Kontakte (4) zum Kontaktieren einer in die Kontaktiereinheit (3) eingeführten Karte (5) aufweist,
**dadurch gekennzeichnet,**
**dass** die Kontaktiereinheit (3) zumindest im Bereich ihrer elektrischen Kontakte (4) von einer insbesondere haubenförmigen Kunststoffabdeckung (8) abgedeckt ist, die auf der Leiterplatte (2) oder an der Kontaktiereinheit (3) befestigt ist und deren der Kontaktiereinheit (3) zugewandte Kunststoffoberfläche (9) zumindest im Bereich der elektrischen Kontakte (4) der Kontaktiereinheit (3) von einer vollflächigen Leiterbahnstruktur mit einer oder mehreren durchgehenden Leiterbahnen (10) überzogen ist, die jeweils mit der Leiterplatte (2) oder der Kontaktiereinheit (3) elektrisch verbunden sind.

2. Kartenleser nach Anspruch 1, **dadurch gekennzeichnet, dass** die Kontaktiereinheit (3) bis auf eine Karteneinführöffnung (7) vollständig von der Kunststoffabdeckung (8) abgedeckt ist.

3. Kartenleser nach Anspruch 1 oder 2, **dadurch gekennzeichnet, dass** die gesamte Kunststoffabdeckung (8) mit der vollflächigen Leiterbahnstruktur überzogen ist.

4. Kartenleser nach einem der vorhergehenden Ansprüche, **dadurch gekennzeichnet, dass** benachbarte Leiterbahnabschnitte (11) der Leiterbahnstruktur im Abstand von höchstens ca. 0,5 mm, vorzugsweise im Abstand von ca. 0,25 mm, vorgesehen sind.

5. Kartenleser nach einem der vorhergehenden Ansprüche, **dadurch gekennzeichnet, dass** die Kunststoffabdeckung (8) auf der Leiterplatte (2) bzw. an der Kontaktiereinheit (3) mechanisch befestigt, insbesondere verschraubt oder verrastet ist.

6. Kartenleser nach einem der vorhergehenden Ansprüche, **dadurch gekennzeichnet, dass** die Kunststoffabdeckung (8) auf der Leiterplatte (2) bzw. an der Kontaktiereinheit (3) durch Löten befestigt ist.

7. Kartenleser nach einem der vorhergehenden Ansprüche, **dadurch gekennzeichnet, dass** die auf der Leiterplatte (2) aufliegende Anlagefläche (12) der Kunststoffabdeckung (8) für jede durchgehende Leiterbahn (10) zwei elektrische Kontakte (13) aufweist, die durch die durchgehende Leiterbahn (10) miteinander elektrisch verbunden sind und elektrische Gegenkontakte (14) der Leiterplatte (2) kontaktieren.

8. Kartenleser nach Anspruch 7, **dadurch gekennzeichnet, dass** die elektrischen Kontakte (13) der Kunststoffabdeckung (8) an die Gegenkontakte (14) der Leiterplatte (2) gelötet oder angedrückt sind.

9. Kartenleser nach einem der vorhergehenden Ansprüche, **dadurch gekennzeichnet, dass** die Kunststoffabdeckung (8) einteilig ist.
